# EUROPÄISCHE PATENTSCHRIFT

(11) **EP 4 417 503 B1**
(45) Veröffentlichungstag und Bekanntmachung des Hinweises auf die Patenterteilung: **03.06.2026**
(21) Anmeldenummer: 24185868.7
(22) Anmeldetag: 06.08.2020
(51) Int. Cl.: B62J 6/015, B62J 6/028, B62J 6/04, B62J 6/055, B62J 6/20, B62J 6/26, B62J 7/06, B62J 9/21, B62J 9/30, B62J 11/19, B62J 43/13, B62J 43/20, B62J 45/00, B62J 45/41, B62K 7/04, B62M 6/90

(54) **LASTENAUFNAHMEBEHÄLTER FÜR LASTENFAHRRÄDER UND LASTENFAHRRAD**
LOAD-RECEIVING CONTAINER FOR LOAD-CARRYING BICYCLES AND LOAD-CARRYING BICYCLES
RÉCIPIENT DE RÉCEPTION DE CHARGE POUR VÉLOS DE TRANSPORT ET VÉLO DE TRANSPORT

(30) Priorität: 30.08.2019 DE 202019104777 U
(43) Veröffentlichungstag der Anmeldung: 21.08.2024
(62) Teilanmeldung aus: 20753916.4
(73) Patentinhaber: RTI Sports GmbH, 56070 Koblenz (DE)
(72) Erfinder: RASCHE, Johannes, 64285 Darmstadt (DE); GRAEVE, Arndt, 56072 Koblenz (DE); ARNOLD, Franc, 56068 Koblenz (DE)
(74) Vertreter: dompatent

(56) Entgegenhaltungen:
- -: "Cargobike jetzt", 5 August 2019 (2019-08-05), pages 1 - 1, XP093207663, Retrieved from the Internet <URL:https://www.facebook.com/cargobike.jetzt/posts/blinker-f%C3%BCrs-cargobike-gef%C3%A4llig-das-start-up-wwwveloriande-aus-berlin-ist-neuer-/1182119735328304/>
- ANONYMOUS: "Manual Urban Arrow Family", URBAN ARROW MANUAL, VERSION UAF-FM2017EN-0001, 1 March 2017 (2017-03-01), XP055560313
- MAX: "Blinker f�rs Lastenrad", 11 November 2018 (2018-11-11), pages 1 - 1, XP093207753, Retrieved from the Internet <URL:https://www.cargobikeforum.de/forum/index.php?threads/blinker-f%C3%BCrs-lastenrad.2482/>
- -: "Darius Evasion", 1 July 2019 (2019-07-01), pages 1 - 1, XP093206313, Retrieved from the Internet <URL:https://web.archive.org/web/20190702075319/https://www.damius.com/fr/le-tricycle-francais-electrique-evasion2.html>

## Beschreibung

Die Erfindung betrifft einen Lastenaufnahmebehälter für Lastenfahrräder, insbesondere für Long John-Lastenfahrräder. Weitergehend betrifft die Erfindung ein Lastenfahrrad, insbesondere ein Long John-Lastenfahrrad.

Zum Transport von Lasten, wie Gütern oder auch Personen und insbesondere Kinder, ist eine Vielzahl unterschiedlich gestalteter Lastenfahrräder bekannt. Beispielsweise sind Lastenfahrräder bekannt, bei denen die Last bzw. ein die Last aufnehmender Lastenaufnahmebehälter zwischen einem Vorderrad und einem Hinterrad angeordnet ist. Hierbei kann es sich beispielsweise um ein einspuriges oder zweispuriges Lastenfahrrad handeln. Weitergehend sind beispielsweise Lastenfahrräder vom Typ "Long John" bekannt. Long John-Lastenfahrräder zeichnen sich insbesondere dadurch aus, dass zwischen Steuerrohr und Vorderrad eine, vorzugsweise tiefliegende, Lastenaufnahme, wie beispielsweise eine Ladefläche, vorgesehen ist.

Bekannte Beleuchtungskonzepte für Lastenfahrräder orientieren sich generell an standardmäßigen Beleuchtungskonzepten für Fahrräder. Derartige Beleuchtungskonzepte von Fahrrädern oder andere Beleuchtungskonzepte für Lastenfahrräder des Stands der Technik führen im Zusammenhang mit Lastenfahrrädern zu zahlreichen Problemen.

"Cargobike jetzt", offenbart die Merkmale des Oberbegriffes des Anspruchs 1.

Beispielsweise ist aufgrund der beträchtlichen Größe von Lastenfahrrädern und hiervon ausgehend bspw. Beleuchtung mit lediglich einer Abblendleuchte und einer Schlussleuchte eine unzureichende Ausleuchtung und somit Erkennbarkeit, insbesondere für weitere Verkehrsteilnehmer, gegeben.

Weitergehend kommt es vor, dass mit bekannter Beleuchtung für Lastenfahrräder nur eine unzureichende Ausleuchtung des Fahrtwegs für den Fahrer gegeben ist. Wird beispielsweise, wie bei Fahrrädern üblich, eine Abblendleuchte am Lenker angebracht, so kann es vorkommen, dass beispielsweise aufgrund von sich vor dem Lenker befindlichen Lasten- und/oder Aufbauten, keine oder lediglich eine unzureichende Ausrichtung des Fahrtwegs vorliegt. Wird hingegen, wie andererseits ebenfalls bei Fahrrädern üblich, eine Abblendleuchte am Vorderrad befestigt, so kommt es aufgrund des Abstands zwischen Fahrer und Lichtquelle, insbesondere bei Long John-Lastenrädern vor, dass ebenfalls lediglich eine unzureichende Ausleuchtung erfolgt. Insbesondere wird der Bereich zwischen Fahrer und Vorderrad nicht ausgeleuchtet, was zu Problemen führen kann.

Darüber hinaus kommt es vor, dass Lastenräder aufgrund unzureichender Beleuchtung im Straßenverkehr von den übrigen Verkehrsteilnehmern nicht als solche wahrgenommen werden und es folglich zu Verwirrungen und/oder Gefahren im Straßenverkehr kommen kann.

Ein weiteres, insbesondere von den oben genannten unabhängiges, Problem bei Lastenfahrrädern liegt bei Kurvenfahrten vor, wenn eingeschränkte Lichtverhältnisse, beispielsweise aufgrund von Dämmerung oder Dunkelheit, vorliegen. So kommt es beispielsweise aufgrund des sich vor dem Fahrrad befindlichen Lasten und/oder Aufbauten und/oder Lastenfahrradkomponenten vor, dass Kurvenspuren, nicht oder nur unzureichend ausgeleuchtet werden. Insbesondere der Bereich des Fahrtwegs, vorzugsweise bei Kurvenfahrten, zwischen Vorderrad und Fahrradfahrer wird bei Beleuchtungskonzepten des Stands der Technik nicht ordnungsgemäß ausgeleuchtet. Hierbei kann es vorkommen, dass Objekte, beispielsweise Pfähle, die sich bei einer Kurvenfahrt zwischen Vorderrad und Fahrrad befinden, nicht wahrgenommen werden können und somit nicht erkannte Gefahrenhindernisse darstellen. Insbesondere bei Long-John Lastenrädern schwenkt generell das Fahrzeug in die Kurvenrichtung, besonders im Vergleich zu normalen Rädern. Darüber hinaus kommt es bei Long-John Lastenrädern generell vor, dass Abblendscheinwerfer die im Bereich des, üblicherweise kleinen, Vorderrads angeordnet sind. Hierdurch kommt es, bspw. bei Hindernissen im Lichtstrahl, zu unzureichender Wahrnehmbarkeit und/oder Ausleuchtung des Lastenrads.

Aufgabe der Erfindung ist es einen Lastenaufnahmebehälter für Lastenfahrräder sowie ein Lastenfahrrad zu schaffen, wobei die Beleuchtung des Lastenfahrrads verbessert ist.

Die Lösung der Aufgabe erfolgt erfindungsgemäß durch einen Lastenaufnahmebehälter mit den Merkmalen des Anspruchs 1 sowie ein Lastenfahrrad mit den Merkmalen des Anspruchs 11.

Bei einem Beleuchtungssystem für Lastenfahrräder gemäß der Erfindung handelt es sich insbesondere um ein Beleuchtungssystem für Long John-Lastenfahrräder. Insbesondere handelt es sich um ein Beleuchtungssystem für einspurige und/oder zweispurige Lastenfahrräder. Besonders bevorzugt ist es, dass es sich um ein Beleuchtungssystem für elektrische Fahrräder (E-Fahrräder), insbesondere Pedelecs und/oder E-Bikes handelt. Das Beleuchtungssystem weist eine Kurvenlichtvorrichtung zur Ausleuchtung einer Kurvenspur auf. Bevorzugt ist es hierbei, dass es sich um eine automatische Kurvenlichtvorrichtung handelt. Automatisch meint hierbei insbesondere, dass beim Fahren einer Kurve, also beispielsweise beim Links- oder Rechtsfahren, automatisch eine jeweilige Ausleuchtung dieser Kurvenfahrt erfolgt. Diese automatische Ausführung der Kurvenlichtvorrichtung kann insbesondere mechanisch und/oder elektrisch vorgenommen sein. Kurve meint hierbei insbesondere jegliche Abweichung von einem geradeaus gerichteten Fahrtweg. Somit ist insbesondere ein Abbiegen, jedoch auch jegliche andere Fahrtrichtungsabweichung inbegriffen. Bevorzugt handelt es sich bei Kurvenfahrten um Fahrten, die mittels Lenkerauslenkung und/oder einem "in die Kurve legen" erfolgen. Es ist bevorzugt, dass die Kurvenlichtvorrichtung neben der Kurvenspur vor dem Vorderrad des Lastenfahrrads auch Bereiche neben und/oder hinter dem Vorderrad des Lastenfahrrads, insbesondere in Kurvenrichtung, ausleuchtet. Vorteilhaft an der erfindungsgemäßen Kurvenlichtvorrichtung ist es insbesondere, dass eine verbesserte Ausleuchtung der Kurvenspur, insbesondere eine vollumfängliche Ausleuchtung der Kurvenspur, erfolgt. Anstelle der automatische Kurvenlichtvorrichtung ist insbesondere auch eine stetige Kurvenlichtvorrichtung möglich. Stetig meint hierbei vorzugsweise eine Kurvenlichtvorrichtung, die bei Aktivierung, bspw. bei Anschaltung, insbesondere unverändert eingeschaltete bleibt. Somit erfolgt insbesondere kein Schwenken und/oder selektives Aktivieren der Kurvenlichtvorrichtung bei Kurvenfahrten. Demnach ist es bevorzugt, dass die stetige Kurvenlichtvorrichtung, insbesondere während der Fahrradnutzung, gleichbleibend ausleuchtend aktiviert ist. Besonders bevorzugt handelt es sich bei der stetigen Kurvenlichtvorrichtung um eine Art Seitenleuchtvorrichtung zur Ausleuchtung von Seitenbereichen, insbesondere dem linken und rechten Bereich neben dem Lastenrad. Insbesondere weist die stetige Kurvenlichtvorrichtung beidseitig jeweils einen Kurvenscheinwerfer auf. Es ist besonders bevorzugt, dass die stetige Kurvenlichtvorrichtung bei bevorzugter Verwendung des Beleuchtungssystem im Rahmen eines mit Long-John-Lastenrads derart ausgeführt und/oder angeordnet ist, dass die stetige Kurvenlichtvorrichtung beidseitig die Seitenbereiche neben Steuerrohr und Vorderrad, vorzugsweise die Seitenbereiche neben der Lastenaufnahme, ausleuchtet. Alternativ oder zusätzlich zur beidseitigen Ausleuchtung der Seitenbereiche neben Steuerrohr und Vorderrad ist es bevorzugt, dass die stetige Kurvenlichtvorrichtung derart ausgeführt und/oder angeordnet ist, dass beidseitig die Seitenbereiche neben dem Vorderrad ausgeleuchtete werden. Hierdurch ist es vorteilhaft umgesetzt, dass beim Long-John Konzept, das stark in Kurvenrichtung schwenkt, Bereiche seitlich des Rades / der Lastenaufnahme ausgeleuchtet sind.

Bevorzugt ist es, dass das Beleuchtungssystem eine oder mehrere der folgenden Komponenten aufweist: eine Positionslaternenleuchtvorrichtung, eine Fahrtrichtungsanzeigerleuchtvorrichtung, eine Konturleuchtvorrichtung, eine Positionsleuchtvorrichtung, eine Hebelleuchtvorrichtung, eine Abblendleuchtvorrichtung, eine Schlussleuchtvorrichtung, einen Rückstrahler, einen Frontstrahler und eine Unterbodenleuchtvorrichtung. Besonders bevorzugt ist es, dass das Beleuchtungssystem eine oder mehrere der vorstehenden Komponenten in Kombination mit der Kurvenlichtvorrichtung aufweist. Andererseits ist es jedoch bevorzugt auch möglich, dass das Beleuchtungssystem keine Kurvenlichtvorrichtung, sondern bevorzugt lediglich eine oder mehrere der vorstehend genannten Komponenten aufweist. Die Positionslaternenleuchtvorrichtung weist insbesondere eine Wimpelleuchte auf. Bevorzugt ist es, dass die Wimpelleuchte mit einem, vorzugsweise, vertikal vom Lastenfahrrad ausgehenden Abstandshalter wie beispielsweise einer Stange mit dem Lastenfahrrad verbunden ist. Geläufig ist es, dass Fahrräder Wimpelfahnen aufweisen, um Aufmerksamkeit zu erregen. Beispielsweise ist es somit möglich, ein Fahrrad auch hinter Objekten wahrzunehmen, insbesondere falls die Wimpelfahne über das Objekt hinausragt. Bei einschränkenden Lichtverhältnissen jedoch sind derartige Wimpelfahnen nicht oder nur unzureichend sichtbar. Mittels Positionslaternenleuchtvorrichtungen kann diesem Nachteil somit begegnet werden. Bei der Fahrtrichtungsanzeigerleuchtvorrichtung handelt es sich mit anderen Worten um eine Blinkervorrichtung. In bevorzugter Ausführung weist die Fahrtrichtungsanzeigerleuchtvorrichtung mindestens eine rechte Fahrtrichtungsanzeigerleuchte und mindestens eine linke Fahrtrichtungsanzeigerleuchte auf. Die Fahrtrichtungsanzeigerleuchten weisen vorzugsweise Orangelicht und/oder blinkendes Licht auf bzw. sind zur Abgabe derartiger Lichter ausgebildet. Es ist besonders bevorzugt, dass das Beleuchtungssystem zumindest zwei rechte und zumindest zwei linke Fahrtrichtungsanzeigerleuchten aufweist, wobei jeweils eine linke und rechte Fahrtrichtungsanzeigerleuchte zur Anbringung oder angebracht im Bereich des Lastenfahrradhecks und Lastenfahrradfront ausgebildet ist. In bevorzugter Weiterbildung weist das Beleuchtungssystem unabhängig oder zusätzlich zu Fahrtrichtungsanzeigerleuchten im Bereich des Hecks oder der Front des Lastenfahrrads mindestens eine rechte und eine linke Fahrtrichtungsanzeigerleuchte jeweils an Seitenwänden eines Lastenaufnahmebehälters auf. Die Konturleuchtvorrichtung ist ausgebildet zur Konturbeleuchtung des Lastenfahrrads und/oder eines Lastenaufnahmebehälters für das Lastenfahrrad. Besonders bevorzugt ist es, dass die Konturleuchtvorrichtung an den äußersten Kanten und/oder Ecken des Lastenfahrrads und/oder des Lastenaufnahmebehälters angeordnet ist, wobei es bevorzugt ist, dass lediglich die oberen Kanten und/oder Ecken die Konturleuchtvorrichtung aufweisen bzw. damit verbunden sind. Mittels der Konturleuchtvorrichtung ist es vorteilhaft möglich, anderen Verkehrsteilnehmern die Kontur des Lastenfahrrads und/oder des Aufnahmebehälters darzustellen und diesen somit insbesondere den Lastenfahrrad-Verkehrsteilnehmer identifizierbar zumachen. Die Positionsleuchtvorrichtung weist insbesondere Positionsleuchten zum Hinweisen anderer Verkehrsteilnehmer auf Position und/oder Bewegungsrichtung des Lastenfahrrads auf. Besonders bevorzugt ist es, dass die Positionsleuchtvorrichtung rote und/oder weiße Positionsleuchten aufweist. Die Nebelleuchtvorrichtung weist mindestens einen, bevorzugt zwei, Nebelscheinwerfer auf, die insbesondere im Wesentlichen in Anlehnung in Nebelscheinwerfer bei Kfz-Fahrzeugen ausgebildet sind. Bevorzugt handelt es sich um breitstrahlende Scheinwerfer, vorzugsweise mit weißem Licht. Breitstrahlend meint hierbei insbesondere einen breiteren Lichtkegel als die Breite des Lichtkegels von Abblendscheinwerfern. Bevorzugt ist es, dass ein Nebelscheinwerfer einen Lichtkegel von über 45 °, von über 60 °, von über 90 °, von über 120 ° oder von über 150 ° aufweist. Möglich ist auch, dass ein Nebelscheinwerfer ein Leuchtkegel von im Wesentlichen 180 ° aufweist. Die Ausführung des Beleuchtungssystem mit Nebelleuchtvorrichtung ist besonders in Kombination mit der Kurvenlichtvorrichtung bevorzugt. Beispielsweise ist es möglich, die Nebelscheinwerfer ebenfalls als Kurvenscheinwerfer einzusetzen bzw. die Funktion von Kurvenscheinwerfern mittels Nebelscheinwerfer zu übernehmen. Somit ist es beispielsweise möglich, über ein selektives links- oder rechtsseitiges Einschalten der Nebelscheinwerfer eine Kurvenausleuchtung, vorzunehmen. Die Abblendleuchtvorrichtung ist vorzugsweise schenkbar. Besonders bevorzugt weist die Abblendleuchtvorrichtung mindestens einen, insbesondere schwenkbaren, Abblendscheinwerfer, besonders bevorzugt zwei, vorzugsweise rechte und linke, Abblendscheinwerfer, auf. Der mindestens eine Abblendscheinwerfer weist insbesondere ein weißes Licht auf. Bevorzugt ist es, dass der Abblendscheinwerfer im Wesentlichen wie standardmäßige Abblendscheinwerfer für Lastenfahrräder und/oder für Fahrräder ausgebildet ist. Bei Vorhandensein von zwei Abblendscheinwerfern ist es bevorzugt, dass diese von der geradeausgerichteten Normalstellung beidseitig schwenkbar sind. Möglich ist es hingegen bevorzugt auch, dass die Abblendscheinwerfer von Normalstellung nur einseitig, insbesondere hin- und zurück schwenkbar sind. Bei bevorzugtem Vorhandensein eines rechten Abblendscheinwerfer ist dieser insbesondere nach rechts schwenkbar. Bei bevorzugtem Vorhandensein eines linken Abblendscheinwerfer ist dieser insbesondere nach links schwenkbar. Die Ausführung des Beleuchtungssystem mit Abblendleuchtvorrichtung ist besonders in Kombination mit der Kurvenlichtvorrichtung bevorzugt. Hierbei kann insbesondere die Funktion der Kurvenlichtvorrichtung von der Abblendleuchtvorrichtung übernommen werden, beispielsweise wenn die Abblendleuchtvorrichtung schwenkbar, vorzugsweise mittels Schwenkvorrichtung (siehe unten) ist. Bei Vorhandensein mindestens eines Abblendscheinwerfers und mindestens eines Nebelscheinwerfers, ist es bevorzugt, dass der Abblendscheinwerfer einen kleineren Lichtpegel als der Nebelscheinwerfer aufweist. Die Schlussleuchtvorrichtung weist insbesondere mindestens eine Schlussleuchte, bevorzugt zwei, vorzugsweise rechte und linke, Schlussleuchten auf. Die mindestens eine Schlussleuchte ist bevorzugt zur Abgabe von rotem Licht ausgebildet. Besonders bevorzugt ist es, dass die Schlussleuchte im Wesentlichen wie standardmäßige Schlussleuchten für Fahrräder und/oder Lastenfahrräder ausgebildet ist. Das erfindungsgemäße Beleuchtungssystem weist insbesondere einen oder mehrerer der folgenden Strahler auf, wobei ebenfalls mehrerer der jeweils im Folgenden einzeln dargestellten Strahler vorhanden sein können: Rückstrahler, Frontstrahler, Speichenstrahler, Seitenstrahler, Pedalstrahler, Radstrahler. Die vorstehenden Strahler sind insbesondere im Wesentlichen wie standardmäßige Strahler von Fahrrädern und/oder Lastenfahrrädern ausgestaltet. Besonders bevorzugt ist es, dass es sich bei einem oder mehrerer der Strahler um Reflektoren handelt. Bei Reflektoren ist es bevorzugt, dass es sich um Reflektorelemente oder Reflektorfarbe oder Reflektorbänder handelt. Bei dem mindestens einen Rückstrahler handelt es sich insbesondere um einen roten Rückstrahler. Bei dem mindestens einen Frontstrahler handelt es sich insbesondere um einen weißen Frontstrahler. Bei dem mindestens einen Seitenstrahler und/oder dem mindestens einen Speichenstrahler und/oder dem mindestens einen Pedalstrahler und/oder dem mindestens einen Radstrahler handelt es sich insbesondere um orangene Strahler. Besonders bevorzugt ist es, dass die vorstehend genannten Strahler derartig farbiges Licht reflektieren. Die Unterbodenleuchtvorrichtung weist insbesondere mindestens eine Unterbodenleuchte auf. Vorzugsweise weist die Unterbodenleuchtvorrichtung mindestens zwei, insbesondere eine rechte und eine linke, Unterbodenleuchte auf. Besonders bevorzugt ist es, dass die Unterbodenleuchtvorrichtung zur Abgabe von weißem Licht ausgebildet ist. Es ist bevorzugt, dass die Unterbodenleuchtvorrichtung zumindest einen seitlichen Bodenbereich neben dem Fahrrad beleuchtet, insbesondere beide seitliche Bodenbereiche beleuchtet. In bevorzugter Ausführung ist die Unterbodenleuchtvorrichtung an nach unten weisenden Flächen des Lastenfahrrads angeordnet bzw. anordenbar. Insbesondere ist die Unterbodenleuchtvorrichtung derart ausgeführt, dass diese die Bodenbereiche seitlich des Vorderrads ausleuchtet.

Bevorzugt ist es, dass die Kurvenlichtvorrichtung eine mindestens ein Kurvenscheinwerfer aufweisende Kurvenleuchtvorrichtung zum Ausleuchten einer Kurvenspur aufweist. Besonders bevorzugt ist es, dass die Kurvenleuchtvorrichtung zwei, insbesondere linken und rechten, Kurvenscheinwerfer zum beidseitigen Ausleuchten aufweist. Insbesondere ist die Kurvenleuchtvorrichtung selektiv aktivierbar, also an- und ausschaltbar. Selektiv aktivierbar meint insbesondere ein selektives Zuführen von Strom zum An- und Ausschalten. Alternativ oder zusätzlich zum selektiven Zuführen von Strom ist es bevorzugt auch möglich das abgegebene Licht selektiv zu abzufangen, bspw. zu verdecken. Ein Verdecken erfolgt vorzugsweise mittels, insbesondere klappbare, Blende. Möglich ist es, dass der/die Kurvenscheinwerfer durch den/die Nebelscheinwerfer ausgeführt ist/sind. Die selektiv aktivierbare Kurvenleuchtvorrichtung entspricht insbesondere einer Ausführung eines statischen Kurvenlichts und/oder von "Cornering Lamps". Bevorzugt ist es demnach, dass die selektive Aktivierbarkeit durch Auslenkung des Lenkers und/oder Aktivierung von Fahrtrichtungsanzeigerbetätiger, insbesondere Blinkerbetätiger, gesteuert wird. Biegt beispielsweise das Lastenfahrrad nach rechts ab, so ist es bevorzugt, dass sich der rechte Kurvenscheinwerfer oder der rechte Nebelscheinwerfer einschaltet und demnach die rechte Kurvenspur ausleuchtet. Bevorzugt ist es, dass die Kurvenlichtvorrichtung eine Schwenkvorrichtung zur Lichtschwenkung in Kurvenrichtung aufweist. Es ist bevorzugt, dass es sich um eine elektrische und/oder mechanische Schwenkvorrichtung handelt. Bevorzugt schwenkt die Schwenkvorrichtung die Abblendleuchtvorrichtung und/oder die Kurvenleuchtvorrichtung und/oder die Nebelleuchtvorrichtung und/oder mindestens eine Lichtlenkvorrichtung, wie beispielsweise eine Linse oder einen Reflektor. Bevorzugt ist es, dass die Lichtlenkvorrichtung ausgeführt ist, das Licht der mindestens einen Abblendleuchtvorrichtung oder der mindestens einen Kurvenleuchtvorrichtung oder der Nebelleuchtvorrichtung abzulenken. Bei dem Reflektor kann es sich beispielsweise um ein Spiegel handeln. Die Schwenkvorrichtung schwenkt vorzugweise in die jeweilige Kurvenrichtung. Bevorzugt ist es, dass mittels Schwenkvorrichtung eine Art dynamisches Kurvenlicht umgesetzt ist. Vollzieht demnach das Lastenfahrrad lediglich einen geringen Kurvenradius, erfolgt ebenfalls ein lediglich geringes Auslenken. Besonders bevorzugt ist es, dass der Schwenkwinkel der Schwenkvorrichtung dem gefahrenen Kurvenwinkel entspricht. Insbesondere weist die Schwenkvorrichtung einen jeweils einseitigen Schwenkwinkel von maximal 15 ° und demnach einen Gesamtschwenkwinkel von maximal 30 ° auf.

In bevorzugter Ausführung weist die Kurvenlichtvorrichtung eine Ermittlungsvorrichtung zur Erkennung einer Kurvenfahrt eines Lastenfahrrads auf.

Besonders bevorzugt ist es, dass die Ermittlungsvorrichtung indirekt oder direkt die mindestens eine Kurvenleuchtvorrichtung und/oder die Schwenkvorrichtung und/oder die Unterbodenleuchtvorrichtung und/oder die Nebelleuchtvorrichtung steuert, insbesondere aktiviert. Eine direkte Steuerung meint hierbei beispielsweise, dass die Ermittlungsvorrichtung direkt die vorstehenden Vorrichtungen ansteuert. Beispielsweise ist es möglich, dass die Ermittlungsvorrichtung eine mechanische Verbindung, wie beispielsweise einen Seilzug oder dergleichen aufweist und hierüber die Schwenkvorrichtung schwenkt und/oder die Abgabe von Licht der Kurvenleuchtvorrichtung und/oder der Unterbodenleuchtvorrichtung und/oder der Nebelleuchtvorrichtung, beispielsweise durch Abdecken, verhindert. Die indirekte Steuerung meint insbesondere, dass die Ermittlungsvorrichtung mit einer Steuereinheit verbunden ist, wobei diese Steuereinheit dann wiederum eine Steuerung der vorstehenden Vorrichtungen ausführt. Die Kommunikation zwischen Steuereinheit und Ermittlungsvorrichtung und/oder zwischen Steuereinheit und den vorstehenden Vorrichtungen (Schwenkvorrichtung, Kurvenleuchtvorrichtung, Unterbodenleuchtvorrichtung, Nebelleuchtvorrichtung) zur Steuerung erfolgt insbesondere kabelgebunden oder drahtlos, beispielsweise über Funk, Wifi, Infrarot oder Bluetooth.

Es ist bevorzugt, dass die Ermittlungsvorrichtung derart ausgebildet ist, dass sie eine Lenkerauslenkung und/oder eine Schräglage des Lastenfahrrads und/oder eine Raddrehung und/oder eine Fahrtrichtungsanzeigerbetätigung erfasst. Bei Erfassen einer Fahrtrichtungsanzeigerbetätigung kann ebendiese Fahrtrichtungsanzeigerbetätigung beispielsweise zur indirekten oder direkten Steuerung der vorstehenden Vorrichtungen (Schwenkvorrichtung, Kurvenleuchtvorrichtung, Unterbodenleuchtvorrichtung, Nebelleuchtvorrichtung) genutzt werden. Sofern die Ermittlungsvorrichtung eine Schräglage des Lastenfahrrads erfasst, ist es möglich, dass die Ermittlungsvorrichtung einen Sensor, insbesondere einen Lagesensor, wie bspw. einen Gyrosensor aufweist. Bei Erfassung einer Lenkerauslenkung und/oder einer Raddrehung ist es bevorzugt, dass die Ermittlungsvorrichtung einen Sensor und/oder eine mechanische Auslenkungs- bzw. Drehungsübertragungsvorrichtung aufweist. Insbesondere beim Aufweisen von Sensoren der Ermittlungsvorrichtung ist es bevorzugt, dass eine Übermittlung des erfassten Signals, also insbesondere eine Ermittlung einer Kurvenfahrt, drahtlos, beispielsweise über Funk, Wifi, Infrarot oder Bluetooth, und/oder drahtgebunden übermittelt wird. Möglich ist es, insbesondere dass am Lenker und/oder am Vorderrad ein Sensor angebracht ist, der eine Auslenkung oder eine Drehung ermittelt und diese, vorzugsweise drahtlos, an die vorstehenden Leuchtvorrichtung oder Schwenkvorrichtung direkt oder indirekt überträgt und somit deren Steuerung bzw. Aktivierung vornimmt.

Es ist bevorzugt, dass die Kurvenleuchtvorrichtung mit einer Batterie zur Stromversorgung verbunden ist. Besonders bevorzugt handelt es sich bei der Batterie um eine wiederaufladbare Batterie, insbesondere um einen Akku. In bevorzugter Ausführung handelt es sich bei der Batterie um eine E-Fahrrad-Batterie, also die Batterie zum Betreiben eines E-Fahrrads, insbesondere des Motors des E-Fahrrads. Es handelt sich vorzugsweise um eine Pedelec-Batterie oder E-Bike-Batterie.

Bei dem erfindungsgemäßen Lastenaufnahmebehälter handelt es sich um einen Lastenaufnahmebehälter für Lastenfahrräder. Besonders bevorzugt ist es, dass es sich um einen Aufnahmebehälter für Güter und/oder Personen, insbesondere Kinder, handelt. Der Lastenaufnahmebehälter weist insbesondere einen, vorzugsweise einseitig geöffneten im Wesentlichen quaderförmigen, Lastenaufnahmebehälterkörper auf. Es ist bevorzugt, dass es sich um einen mehrteiligen, insbesondere zweiteiligen Lastenaufnahmebehälterkörper handelt. Bevorzugt ist der Lastenaufnahmebehälterkörper in zwei identische Teile geteilt. Besonders bevorzugt ist der Lastenaufnahmebehälterkörper vertikal geteilt. Bei vertikaler Teilung ist es bevorzugt, dass diese Teilung in Längsrichtung, insbesondere in Fahrtrichtung bei mit einem Lastenrad verbundenen Lastenaufnahmebehälter vorgenommen ist. In bevorzugter Ausführung handelt es sich um ein selektiv mit dem Lastenfahrrad verbindbar, insbesondere koppelbaren, Lastenaufnahmebehälter. Somit ist es bevorzugt, dass der Lastenaufnahmebehälter von dem Lastenfahrrad abnehmbar ist. Vorzugsweise handelt es sich um einen Lastenaufnahmebehälter für Long John-Lastenfahrräder. Der Lastenaufnahmebehälter weist ein Beleuchtungssystem mit einem oder mehreren der vorstehend beschriebenen Merkmale auf. Bevorzugt ist es, dass der Lastenaufnahmebehälter ein erfindungsgemäßes Beleuchtungssystem mit Kurvenlichtvorrichtung aufweist. Möglich ist es jedoch alternativ auch, dass der Lastenaufnahmebehälter ein Beleuchtungssystem ohne Kurvenlichtvorrichtung aufweist. Insbesondere weist der Lastenaufnahmebehälter demnach ein Beleuchtungssystem mit einer oder mehrere der oben beschriebenen Leuchtvorrichtung, ohne Kurvenlichtvorrichtung, auf. Besonders bevorzugt ist es, dass der Lastenaufnahmebehälter ein Beleuchtungssystem mit der Positionslaternenleuchtvorrichtung und/oder der Fahrtrichtungsanzeigeleuchtvorrichtung und/oder der Konturleuchtvorrichtung und/oder der Positionsleuchtvorrichtung und/oder der Nebelleuchtvorrichtung und/oder der Abblendleuchtvorrichtung und/oder der Schlussleuchtvorrichtung und/oder dem mindestens einen Rückstrahler und/oder dem mindestens einen Frontstrahler und/oder der Unterbodenleuchtvorrichtung aufweist. Weist der Lastenaufnahmebehälter ein Beleuchtungssystem mit Positionslaternenleuchtvorrichtung auf, ist es bevorzugt, dass die Positionslaternenleuchtvorrichtung von einem Deckel oder einer Wand des Lastenaufnahmebehälters, vorzugsweise vertikal nach oben, ausgeht. Weist der Lastenaufnahmebehälter ein Beleuchtungssystem mit einem oder mehrere der übrigen vorstehend genannten Leuchtvorrichtungen und/oder Strahler auf, ist es bevorzugt, dass diese Leuchtvorrichtungen und/oder Strahler mit Außenflächen des Lastenaufnahmebehälters verbunden, insbesondere hieran angebracht, sind. Alternativ oder zusätzlich ist es möglich, dass diese Leuchtvorrichtung und/oder Strahler innerhalb der Kontur des Lastenaufnahmebehälters aufgenommen sind, insbesondere in den Lastenaufnahmebehälter eingelassen sind. Bevorzugt ist es, dass die Verbindung der vorstehenden Leuchtvorrichtung und/oder Strahler mit dem Lastenaufnahmebehälter mittels Klebung und/oder Verschraubung und/oder Vernietung und/oder mittels Formschlussverbindung erfolgt. Bei bevorzugter Ausführung, bei der der Lastenaufnahmebehälter die Abblendleuchtvorrichtung und/oder die Kurvenlichtvorrichtung aufweist, ist es bevorzugt, dass die Abblendleuchtvorrichtung und/oder die Kurvenlichtvorrichtung höher angeordnet ist, als das Vorderrad und/oder als das Vorderradgabelelement. Hierdurch ist es vorteilhaft möglich, insbesondere trotz kleinem Vorderrad, bspw. bei einem Long-John-Lastenrad, eine höher liegende Ausleuchtung zu erreichen.

Es ist bevorzugt, dass der Lastenaufnahmebehälterkörper Kunststoffe aufweist, insbesondere daraus besteht. Bevorzugt werden hierbei thermoplastische Kunststoffe eingesetzt. Vorzugsweise werden Schäumen, wie PUR- und Partikelschäume verwendet. Insbesondere sind geschlossenporige Schäume bevorzugt. Der Lastenaufnahmebehälterkörper weist insbesondere EPP (expandiertes Polypropylen) auf und ist besonders bevorzugt aus diesem Material hergestellt. Ferner können als Materialien EPS (expandiertes Polysyrol) und EPE (expandiertes Polyethylen) verwendet werden. Auch eine Kombination dieser Materialien, z.B. Polystyrol, kombiniert mit einem Polyolefin, wie beispielsweise Polyethylen, ist möglich. Auch eine Kombination der Materialien mit anderen Materialien ist möglich, zum Beispiel in einem Mehrschichtaufbau oder Sandwichaufbau.

Des Weiteren ist als Material für den Lastenaufnahmebehälterkörper ein thermoplastischer elastomerer Kugelschaum geeignet. Ein derartiger Schaum wird von der Firma Sekisui unter dem Produktnamen "ELASTIL" angeboten. Dabei handelt es sich insbesondere um einen geschlossenzelligen Schaum. In bevorzugter Ausführungsform weist der Lastenaufnahmebehälterkörper erfindungsgemäß einen thermoplastischen elastomeren Kugelschaum wie insbesondere Elastil auf oder ist aus diesem hergestellt. Möglich ist auch eine Kombination mit den anderen beschriebenen, für die Ausbildung des Lastenaufnahmebehälterkörpers geeigneten Materialien.

Ein weiteres gut geeignetes Material zur Ausbildung des Lastenaufnahmebehälterkörpers ist ein Polyester-basiertes PU-Material. Besonders geeignet ist hierbei das von der Firma BASF unter dem Markennamen "Elastopan" angebotene Material. Vorzugsweise weist der Lastenaufnahmebehälterkörper ein derartiges Material auf oder ist aus diesem hergestellt, wobei es wiederum möglich ist, dieses Material mit anderen beschriebenen Materialien zu kombinieren.

Besonders bevorzugt ist es, dass der Lastenaufnahmebehälterkörper einen oder mehrere Partikelschäume aufweist und insbesondere aus einem oder mehre-ren Partikelschäumen hergestellt ist. Als Grundmaterial sind hierbei E-PTU, EPP, EPS, EPE oder ähnliche Schäume besonders bevorzugt. Partikelschäume bestehen hierbei in der Regel aus kleinen Kügelchen des expandierten Grundmaterials. Diese als Kügelchen oder andere Körper geformten Partikel werden in einem Werkzeug wie einer Form oder dergleichen unter Temperatur, ggf. auch unter Wasserdampf in ihre Endform gebracht. Partikelschäume haben insbesondere den Vorteil, dass sie eine gute Wärme-/Kälteisolation, gute Dämpfungseigenschaften und eine geringe Dichte aufweisen sowie kostengünstig herzustellen sind.

Bei mehrteiligem Lastenaufnahmebehälterkörper ist es bevorzugt die mehreren Teile identisch, beispielsweise mittels einer Form, insbesondere einer Gussforme, herzustellen.

Alternativ zur gegossenen Ausführung ist ein 3D-gedruckter Lastenaufnahmebehälterkörper bevorzugt.

In bevorzugter Ausführung weist der Lastenaufnahmebehälter eine Innenraumbeleuchtung zur Ausleuchtung zumindest eines Teils des Innenraums des Lastenaufnahmebehälters auf.

Bevorzugt ist es, dass der Lastenaufnahmebehälter eine Lastenaufnahmebehälterdeckelöffnungssensorik zur Erfassung des Öffnungszustandes eines Lastenaufnahmebehälterdeckels aufweist. Besonders bevorzugt ist es, dass die Lastenaufnahmebehälterdeckelöffnungssensorik direkt oder indirekt eine Steuerung der Innenraumbeleuchtung, also vorzugsweise eine Aktivierung bei Öffnen des Lastenaufnahmedeckels und/oder Deaktivierung bei Schließen des Lastenaufnahmebehälters aufweist. Bei indirekter Steuerung ist es bevorzugt, dass der Lastenaufnahmebehälter mindestens eine Steuereinheit aufweist, die einerseits mit der Lastenaufnahmebehälterdeckelöffnungssensorik und andererseits mit der Innenraumbeleuchtung verbunden ist, sodass über die Steuereinheit eine Steuerung erfolgt. Besonders bevorzugt ist es, dass die Lastenaufnahmebehälterdeckelöffnungssensorik einen mechanischen und/oder elektrischen Sensor aufweist. Bei dem mechanischen Sensor handelt es sich insbesondere um eine Art mechanischen Kühlschranklichtsensor. Bei dem elektrischen Sensor handelt es sich insbesondere um einen magnetischen Sensor.

Erfindungsgemäß weist der Lastenaufnahmebehälter mindestens eine zur Außenseite hin offene Ausnehmung auf, wobei die Fahrtrichtungsanzeigeleuchtvorrichtung zumindest teilweise in der Ausnehmung aufgenommen ist. Bei der mindestens eine Ausnehmung handelt es sich insbesondere um eine urgeformte Ausnehmung, also vorzugsweise um eine Ausnehmung, die bei Urformung des Lastenaufnahmebehälters bereits gefertigt wurde, bspw. mittels entsprechender Gussform. Alternativ oder zusätzlich zur urgeformten Ausnehmung ist auch eine trenngefertigte Ausnehmung, also eine mittels Trennverfahren, insbesondere mittels Bohrens und/oder Drehens und/oder Fräsens hergestellte Ausnehmung möglich. Verschieden hergestellte Ausnehmungen, bspw. urgeformte und trenngefertigte Ausnehmungen sind möglich. Außenseite meint hierbei insbesondere die Umgebung, exklusive Innenraum, des Lastenaufnahmebehälters. Eine weitere Ausnehmung ist insbesondere ausgebildet zur Aufnahme mindestens einer der oben beschriebenen Leuchtvorrichtungen und/oder zur Aufnahme einer Energieversorgungsvorrichtung, insbesondere für die Kurvenlichtvorrichtung, ausgebildet. Besonders bevorzugt ist es, dass die Ausnehmung die Konturleuchtvorrichtung und/oder die Positionsleuchtvorrichtung und/oder die Nebelleuchtvorrichtung und/oder die Abblendleuchtvorrichtung und/oder die Schlussleuchtvorrichtung und/oder den mindestens einen Rückstrahler und/oder den mindestens einen Frontstrahler und/oder die Unterbodenleuchtvorrichtung aufnimmt, wobei es bevorzugt ist, dass zumindest eine Teil-, vorzugsweise eine Gesamtaufnahme, innerhalb der Außenkontur des Lastenaufnahmebehälters, vorliegt. Besonders bevorzugt ist es, dass die Energieversorgungsvorrichtung eine Batterie aufweist, insbesondere daraus besteht. Alternativ oder zusätzlich ist es bevorzugt, dass die Energieversorgungsvorrichtung eine Dockingvorrichtung zur, insbesondere selektiven, Verbindung mit einer E-Fahrrad-Batterie aufweist.

In bevorzugter Ausführung ist die Kurvenleuchtvorrichtung am Lastenaufnahmebehälter, vorzugsweise am Lastenaufnahmebehälterkörper, angeordnet, insbesondere an der Außenseite mit dem Lastenaufnahmebehälter, vorzugsweise Lastenaufnahmebehälterköper, verbunden. Besonders bevorzugt ist es, dass die Kurvenleuchtvorrichtung an der Front des Lastenaufnahmebehälters, also beispielsweise der Frontwand des Lastenaufnahmebehälters, angeordnet ist.

In bevorzugter Ausführung ist die Kurvenleuchtvorrichtung beidseitig an der Front und/oder an jeweils einer Seitenwand des Lastenaufnahmebehälters angeordnet. Alternativ oder zusätzlich zur Anordnung an Front- und/oder Seitenwänden ist es bevorzugt, dass die Kurvenleuchtvorrichtung in der unteren Hälfte, bevorzugt dem unteren Drittel, besonders bevorzugt dem unteren Viertel des Lastenaufnahmebehälters angeordnet ist. Alternativ oder zusätzlich zur Anordnung der Kurvenleuchtvorrichtung an Front- und/oder Seitenwänden oder der vorstehend beschriebenen unteren Anordnung ist es bevorzugt, dass die Kurvenleuchtvorrichtung im seitlichen Kantenbereich, vorzugsweise im äußeren Viertel der seitlichen Kantenbereiche, angeordnet ist. Die vorstehend beschriebene untere Anordnung meint insbesondere eine horizontale Unterteilung des Lastenaufnahmebehälters in zwei Hälften oder drei Drittel oder vier Viertel. Die vorstehend beschriebene Anordnung im seitlichen Kantenbereich meint insbesondere eine vertikale Unterteilung in vier Viertel, wobei es sodann bevorzugt ist, dass die Kurvenleuchtvorrichtung in einem oder beiden der äußeren Viertel, insbesondere der Front, angeordnet ist.

In bevorzugter Ausführung weist der Lastenaufnahmebehälter mindestens eine Kavität auf. Die Kavität ist insbesondere zur Innenseite hin offen oder innenliegend ausgebildet. Zur Innenseite hin offen meint hierbei eine Kavität, die als Ausnehmung zum Innenraum des Lastenaufnahmebehälters ausgebildet ist. Innenliegende Kavität meint eine, vorzugsweise geschlossene, Öffnung innerhalb des Lastenaufnahmebehälterkörpers, vorzugsweise innerhalb mindestens einer Lastenaufnahmebehälterwand und/oder Lastenaufnahmebehälterboden und/oder Lastenaufnahmebehälterdeckel. Bei der mindestens eine Kavität handelt es sich insbesondere um eine urgeformte Kavität, also vorzugsweise um eine Kavität, die bei Urformung des Lastenaufnahmebehälters bereits gefertigt wurde, bspw. mittels entsprechender Gussform. Innenliegende Kavitäten lassen sich bevorzugt, vorteilhaft bei zweiteiligem Lastenaufnahmebehälterkörper direkt mittels Gussform erzeugen. Diese innenliegenden Kavitäten sind bei einteiliger Form nicht oder nur schwer umsetzbar. Alternativ oder zusätzlich zur urgeformten Kavität ist auch eine trenngefertigte Kavität, also eine mittels Trennverfahren, insbesondere mittels Bohrens und/oder Drehens und/oder Fräsens hergestellte Kavität möglich. Verschieden hergestellte Kavitäten, bspw. urgeformte und trenngefertigte Kavitäten sind möglich. Bevorzugt ist es, dass die mindestens eine Kavität zur Aufnahme mindestens eines Kabels, insbesondere für die Leuchtvorrichtung; und/oder zur Aufnahme mindestens einer Steuervorrichtung, insbesondere für die Kurvenlichtvorrichtung; und/oder zur Aufnahme einer, vorzugsweise eine Batterie aufweisenden, Energieversorgungsvorrichtung, insbesondere für die Kurvenlichtvorrichtung; und/oder zur Aufnahme der Innenraumbeleuchtung; ausgebildet ist. Bei der Aufnahme von mindestens einem Kabel ist es bevorzugt, dass die Kavität als eine Art offener oder geschlossener Kabelkanal ausgeführt ist. Möglich ist es ebenfalls, alternativ oder zusätzlich, dass die Kavität zur Aufnahme der Lastenaufnahmebehälterdeckelöffnungssensorik ausgeführt ist.

Bei Ausführung der Kavität als zur Innenseite hin offenen Ausnehmung und/oder bei der zur Außenseite hin offenen Ausnehmung ist es auch möglich, dass es sich hierbei um eine von der Außenseite zur Innenseite hindurchgehende Öffnung handelt.

In bevorzugter Ausführung weist der Lastenaufnahmebehälter eine an der Außenseite des Lastenaufnahmebehälters angeordnete Strahlervorrichtung auf. Bevorzugt ist es, dass die Strahlervorrichtung mindestens einen Reflektor aufweist, insbesondere daraus besteht. Bei dem mindestens einen Reflektor kann es sich beispielsweise um ein Reflektorband und/oder Reflektorfarbe handeln. Besonders bevorzugt ist es, dass die Strahlervorrichtung an einer Seite, insbesondere linken, Seitenwand des Lastenaufnahmebehälters und/oder an einer anderen, insbesondere rechten, Seitenwand des Lastenaufnahmebehälters und/oder an einer Front des Lastenaufnahmebehälters und/oder an einem Heck des Lastenaufnahmebehälters und/oder an einem Lastenaufnahmebehälterdeck angeordnet ist. Bei Ausführung des Lastenaufnahmebehälters mittels Strahlervorrichtung ist es beispielsweise vorteilhaft umgesetzt, dass der Lastenaufnahmebehälter auch ohne Energieversorgung bspw. im Straßenverkehr wahrgenommen werden kann. Insbesondere ist es hierdurch vorteilhaft, dass auch ein vom Lastenfahrrad abgetrennter Lastenaufnahmebehälter wahrgenommen werden kann.

Bei dem erfindungsgemäßen Lastenfahrrad handelt es sich insbesondere um ein Long John-Lastenfahrrad. Besonders bevorzugt handelt es sich um ein E-Lastenfahrrad, beispielsweise ausgeführt als Pedelec oder E-Bike. Das Lastenfahrrad weist einen, vorzugsweise ein Trageelement aufweisenden, Lastenfahrradrahmen auf. Das Tragelement ist insbesondere zur Aufnahme eines, vorzugsweise erfindungsgemäßen, Lastenaufnahmebehälters ausgeführt. Bevorzugt ist es, dass das Tragelement zwischen Lenkerrohr und Gabelelement des Vorderrads angeordnet ist. Weitergehend weist das Lastenfahrrad ein Beleuchtungssystem mit einem oder mehrerer der vorstehend beschriebenen Merkmale auf. Das Beleuchtungssystem ist mit dem Lastenfahrradrahmen direkt oder indirekt verbunden, insbesondere darauf angeordnet. Bei einer indirekten Verbindung ist es bevorzugt, dass das Beleuchtungssystem mit dem Lastenaufnahmebehälter verbunden, insbesondere auf diesem angeordnet, ist.

Bevorzugt ist es, dass das Lastenfahrrad eine mit dem Lastenfahrradrahmen verbundene E-Fahrrad-Batterie aufweist. Bevorzugt ist es, dass die E-Fahrrad-Batterie im Bereich des Tragelements angeordnet, insbesondere im Bereich des Tragelements mit dem Lastenfahrradrahmen verbunden ist. Besonders bevorzugt ist es, dass das Beleuchtungssystem zur Energieversorgung mit der E-Fahrrad-Batterie verbunden ist.

In bevorzugter Ausführung weist das Lastenfahrrad einen Lastenaufnahmebehälter mit einem oder mehreren Merkmalen des oben beschriebenen erfindungsgemäßen Lastenaufnahmebehälters auf. Hierbei handelt es sich bei dem Beleuchtungssystem des Lastenfahrrads um das Beleuchtungssystem des Lastenaufnahmebehälters. Mit anderen Worten wird das Beleuchtungssystem des Lastenfahrrads durch das Beleuchtungssystem des Lastenaufnahmebehälters ausgebildet.

Es ist bevorzugt, dass das Lastenfahrrad ein Dockingsystem zur Energieverbindung des Lastenaufnahmebehälters mit der E-Fahrrad-Batterie aufweist. Besonders bevorzugt ist es, dass die Energieverbindung selektiv verbindbar, vorzugsweise koppelbar ist. Es ist bevorzugt, dass die Energieverbindung zur Energieversorgung des Lastenaufnahmebehälters, insbesondere des Beleuchtungssystems des Lastenaufnahmebehälters, durch die E-Fahrrad-Batterie ausgeführt ist.

In bevorzugter Ausführungsform weist das Dockingsystem eine erste Dockingvorrichtung und eine zweite Dockingvorrichtung auf. Die erste Dockingvorrichtung ist mit dem Lastenaufnahmebehälter, insbesondere fest, verbunden. Vor-Nachfolgend wird die Erfindung anhand bevorzugter Ausführungsformen unter Bezugnahme auf die anliegenden Zeichnungen näher erläutert.

Es zeigen:
- Figur 1: eine schematische, perspektivische Ansicht einer erfindungsgemäßen Ausführungsform eines Lastenfahrrads mit einer erfindungsgemäßen Ausführungsform eines Beleuchtungssystems,
- Figur 2: eine schematische, perspektivische Ansicht einer erfindungsgemäßen Ausführungsform eines Lastenaufnahmebehälters mit einer weiteren erfindungsgemäßen Ausführungsform eines Beleuchtungssystems, und
- Figur 3: eine schematische Schnittansicht einer weiteren erfindungsgemäßen Ausführungsform eines Lastenaufnahmebehälters mit einer weiteren erfindungsgemäßen Ausführungsform eines Beleuchtungssystems.

Identische Bauteile bzw. Elemente werden in den Figuren mit den gleichen Bezugszeichen, bzw. Variationen hiervon (beispielsweise 122, 122a, 122b, usw.) identifiziert. Insbesondere zur verbesserten Übersichtlichkeit werden, vorzugsweise bereits identifizierte, Elemente nicht in allen Figuren mit Bezugszeichen versehen.

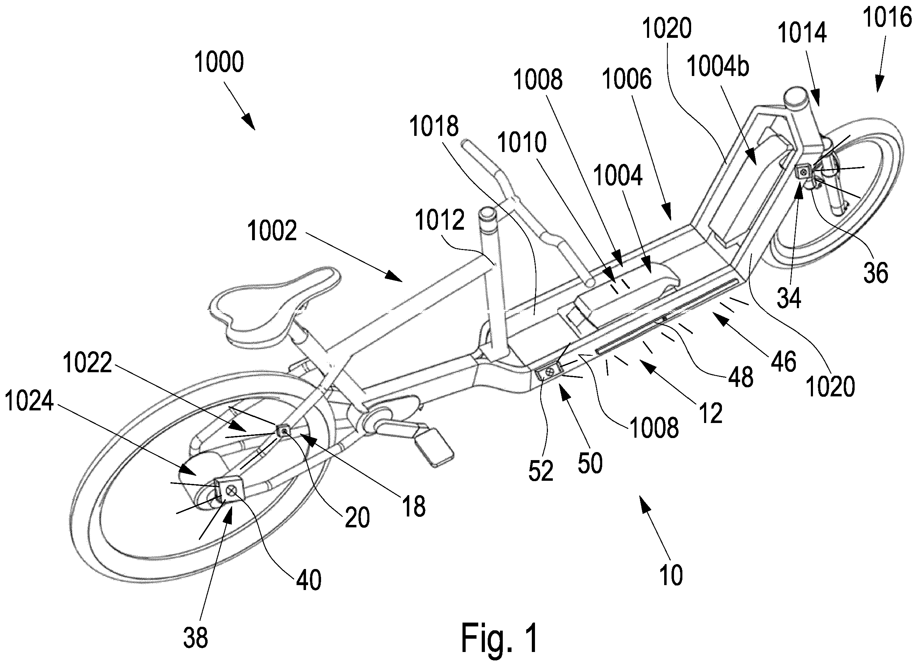

Figur 1 zeigt eine erfindungsgemäße Ausführungsform eines Lastenfahrrades 1000, wobei es sich dargestellt um ein Lastenfahrrad 1000 in Variante eines Long John-Lastenfahrrads handelt. Ferner ist in Figur 1 eine erfindungsgemäße Ausführungsform eines Beleuchtungssystem 10 zu sehen.

Zwischen Lenkerrohr 1012 und Gabelelement 1014 des Vorderrads 1016 weist das Lastenfahrrad 1000 ein Tragelement 1006 auf, welches mit dem Lastenfahrradrahmen 1002, vorzugsweise einstückig (auch als integral zu bezeichnen), verbunden ist. Das Tragelement 1006, weist in dargestellter Ausführungsform zwei horizontale Rahmenelemente 1018 auf, die einerseits mit dem Lenkerrohr 1012 und andererseits über, vorzugsweise einstückig mit den Rahmenelementen 1018 verbundenen, steigend verlaufenden Rahmenelementen 1020 mit dem Vorderrad 1016, insbesondere über ein Gabelelement 1014, verbunden sind.

Im dargestellten Ausführungsbeispiel weist das Lastenfahrrad 1000 zwei Batterien 1004, 1004b auf. In alternativen, nicht dargestellten Ausführungsbeispielen, ist es möglich, lediglich eine Batterie 1004 oder 1004b, insbesondere bei ansonsten identischer Ausführung des Lastenfahrrads 1000, zu haben. Bei den Batterien 1004, 1004b handelt es sich um E-Fahrrad-Batterien, die insbesondere hauptsächlich zum Betrieb des Elektromotors 1024 des Lastenfahrrads 1000 dienen. Bevorzugt handelt es sich bei dem dargestellten Ausführungsbeispiel somit um ein E-Fahrrad, insbesondere in Ausführung als Pedelec oder E-Bike. Die Batterie 1004 und/oder die Batterie 1004b dienen darüber hinaus insbesondere zur Energieversorgung einer oder mehrerer der dargestellten Leuchtvorrichtungen 18, 34, 38, 46, 50 des Beleuchtungssystems 10. Hierzu ist es bevorzugt, dass zumindest eine, insbesondere alle, Leuchtvorrichtungen 18, 34, 38, 46, 50 über (nicht dargestellte) Kabel mit der Batterie 1004 und/oder der Batterie 1004b verbunden sind. Zusätzlich oder alternativ ist es bevorzugt, dass eine oder mehrere, insbesondere alle, Leuchtvorrichtungen 18, 34, 38, 46, 50 mit einer oder mehrerer Steuervorrichtungen (nicht dargestellt) zur Ansteuerung ebendieser verbunden sind. Die Ansteuerung erfolgt bevorzugt kabelgebunden und/oder drahtlos.

Das Beleuchtungssystem 10 weist dargestellt mehrere Leuchtvorrichtungen 18, 34, 38, 46, 50 auf, wobei beispielhaft jeweils nur ein Element 20, 36, 40, 48, 50 der jeweiligen Leuchtvorrichtung 18, 34, 38, 46, 50 dargestellt ist. Bevorzugt ist es möglich mehrere derartige Elemente 20, 36, 40, 48, 52 vorzusehen. Besonders bevorzugt ist es, dass jeweils auf der gegenüberliegenden Rahmenseite, vorzugsweise in den entsprechend gleicher Weise, ein entsprechendes Element 20, 36, 40, 48, 52 am Lastenradrahmen 1002 angebracht ist und/oder mit diesem verbunden ist.

Am Hinterbau 1022 ist einerseits eine Schlussleuchtvorrichtung 38 mit, dargestellt einer, Schlussleuchte 40 mit dem Fahrradrahmen 1002 verbunden. Bevorzugt ist es, dass die Schlussleuchte rotes Licht nach hinten abgibt. Darüber hinaus ist am Hinterbau 1022 eine Fahrtrichtungsanzeigerleuchtvorrichtung 18, die eine Fahrtrichtungsanzeigerleuchte 20 aufweist, mit dem Fahrradrahmen 1002 verbunden. Bevorzugt ist es hierbei, dass die Fahrtrichtungsanzeigerleuchtvorrichtung 18 blinkend orangenes Licht je nach angezeigter Fahrtrichtung auf einer Seite des Lastenfahrrads 1000 abgibt. Nicht dargestellt, jedoch bevorzugt, ist es, dass das Lastenfahrrad 1000 ebenfalls Fahrtrichtungsanzeigeleuchten am Vorderbau, insbesondere an den steigend verlaufenden Rahmenelementen 1020, aufweist, die insbesondere nach vorne Licht abgeben.

Mit den steigend verlaufenden Rahmenelementen 1020 ist dargestellt eine Abblendleuchtvorrichtung 34, dargestellt mit einem Abblendscheinwerfer 36, verbunden. Bevorzugt ist es, dass die Abblendleuchtvorrichtung 34 weißes Abblendlicht nach vorne abgibt.

Mit dem Tragelement 1006, bevorzugt mit den horizontalen Rahmenelementen 1008, besonders bevorzugt, wie im Wesentlichen im Bereich des Lenkerrohrs 1012, weist das Lastenfahrrad 1000 eine Kurvenleuchtvorrichtung 50 einer Kurvenlichtvorrichtung 12 auf. Dargestellt weist die Kurvenleuchtvorrichtung 50 einen Kurvenscheinwerfer 52 auf. Bevorzugt ist es, dass die Kurvenleuchtvorrichtung 50 bei einer Kurvenfahrt des Fahrrads selektiv eingeschaltet wird, wobei bei einer Rechtskurve bevorzugt der dargestellte Kurvenscheinwerfer 52 aktiviert wird und insbesondere bei einer Linkskurve ein gegenüberliegender, nicht dargestellter, Kurvenscheinwerfer aktiviert wird.

Mit dem Tragelement 1006 ist ferner eine Unterbodenleuchtvorrichtung 46, mit dargestellt aufweisendem Unterbodenscheinwerfer 48 verbunden. Alternativ oder zusätzlich zu dem Kurvenscheinwerfer 52 ist es möglich, die Unterbodenleuchtvorrichtung, insbesondere auf der jeweiligen Seite, bei einer Kurvenfahrt zu aktivieren und somit mittels Unterbodenleuchtvorrichtung 46 eine Kurvenlichtvorrichtung 12 auszuführen. Darüber hinaus ist es alternativ oder zusätzlich möglich, die Kurvenleuchtvorrichtung 50 und/oder die Abblendleuchtvorrichtung 34, vorzugsweise mittels, nicht dargestellter, Schwenkvorrichtung in jeweilige Kurvenrichtung zu schwenken und somit eine Kurvenfahrt auszuleuchten.

Vorteilhaft mittels, insbesondere dargestellter, Kurvenlichtvorrichtung 12 mit Kurvenleuchtvorrichtung 50 und/oder Unterbodenleuchtvorrichtung 46 ist es, dass Bereiche zwischen Lenkrohr und Vorderrad, insbesondere in Kurvenrichtung, ausgeleuchtet werden. Hindernisse, die sich in diesem Bereich befinden, werden somit, insbesondere im Unterschied zum Stand der Technik beleuchtet und können demnach identifiziert werden.

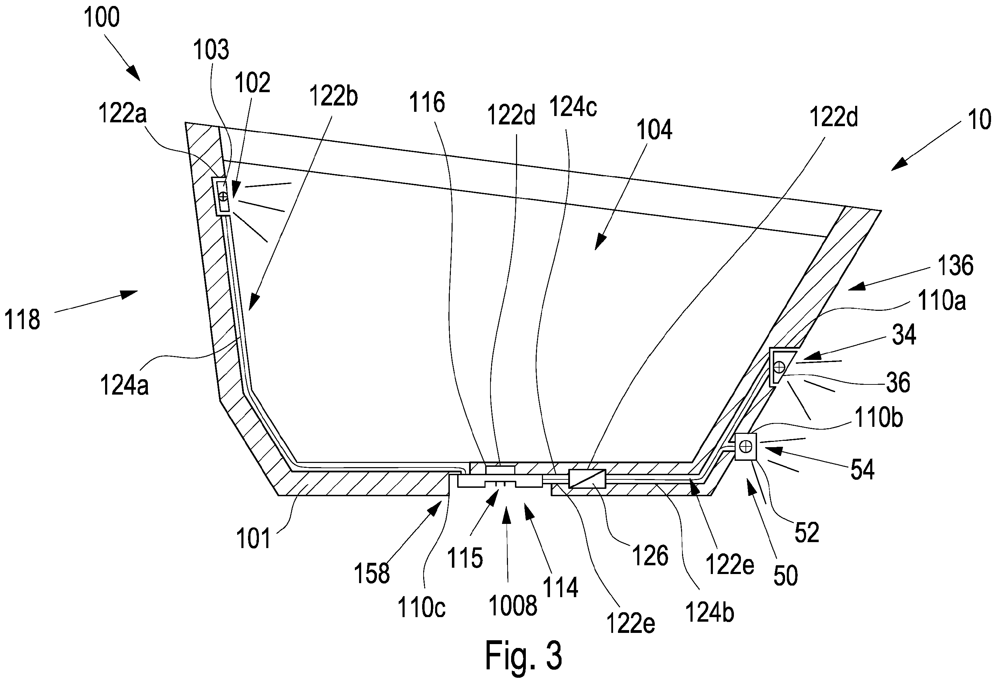

Ferner ist ein Dockingsystem 1008 mit Dockingvorrichtung 1010 zur Energieübertragung der Batterie 1004, beispielsweise an einem Lastenaufnahmebehälter 100 (siehe beispielsweise Figur 3) vorgesehen. Bevorzugt handelt es sich bei der dargestellten Dockingvorrichtung 1010 um eine Kontaktschnittstelle zur Energieübertragung mit einer, nicht dargestellten, weiteren Kontaktschnittstelle eines Stromabnehmers, beispielsweise eines Lastenaufnahmebehälters 100 (siehe beispielsweise Figur 3).

In Figur 1 (und Figur 3) sind beispielhaft Linien ausgehend von den Leuchtvorrichtungen, bspw. ausgehend von Schlussleuchte 40, dargestellt. Hierbei handelt es sich um beispielhafte, schematische Darstellungen des abgegebenen Lichts. Insbesondere stellen dies Linien die Leuchtrichtung beispielhaft dar. In alternativer Darstellung können diese Linien jedoch auch weggelassen werden.

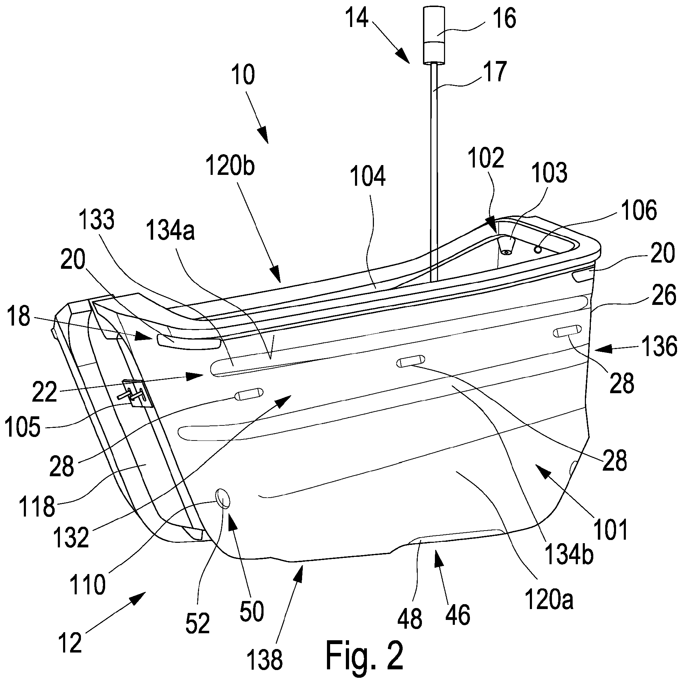

Figur 2 zeigt eine erfindungsgemäße Ausführungsform eines Lastenaufnahmebehälters 100 mit einer weiteren erfindungsgemäßen Ausführungsform eines Beleuchtungssystems 10.

Mit dem Lastenaufnahmebehälterkörper 101 ist eine sich nach oben erstreckende Positionslaternenleuchtvorrichtung 14 mit Wimpelleuchte 16 verbunden. Zwischen Wimpelleuchte 16 und Lastenaufnahmebehälterkörper 101 ist eine Verbindungsstange 17 zur Beabstandung angeordnet. An den Seitenwänden 120a, 120b sind nach außen Reflektorbänder 134b mit der Außenseite des Lastenaufnahmebehälterkörpers 101 verbunden, die sich insbesondere bis zum Heck 136 und/oder bis zur Front 118 erstrecken. Der Lastenaufnahmebehälter 100 weist fernen einen Alubügel 133 auf, welcher insbesondere mit Reflektorfarbe 134a, zumindest teilweise, beschichtet ist. Die Reflektorbänder 134b und die Reflektorfarbe 134a bilden demnach Reflektoren 134 aus.

Im Bereich der Front 118 und des Hecks 136 weist der Lastenaufnahmebehälter 100 eine Fahrtrichtungsanzeigerleuchtvorrichtung 18 mit zwei Fahrtrichtungsanzeigerleuchten 20, insbesondere Blinkern, auf.

Die Seitenwand 120a sowie vorzugsweise die Seitenwand 120b weist ferner eine Positionsleuchtvorrichtung 26 mit dargestellt drei Positionsleuchten 28 auf.

An der Front, besonders bevorzugt in Ausnehmungen 110 des Lastenaufnahmebehälters 100 ist eine Kurvenleuchtvorrichtung 50, mit, dargestellt einem, Kurvenscheinwerfer 52 vorhanden. Möglich ist es, dass die Kurvenleuchtvorrichtung 50 mittels, nicht dargestellter, Schwenkvorrichtung 54 gesteuert, vorzugsweise in Kurvenrichtung, wird und/oder die Kurvenscheinwerfer 52 selektiv aktiviert werden, um eine Kurvenausleuchtung vorzunehmen.

Weitergehend weist der Lastenaufnahmebehälter 100 im Bereich des Bodens 138 eine Unterbodenleuchtvorrichtung 46 mit Unterbodenleuchte 48 auf.

Im Bereich des Innenraums 104, vorzugsweise im oberen Bereich, an der Innenseite, weist der Lastenaufnahmebehälter 100 eine Innenraumbeleuchtung 102 mit Innenraumleuchte 103 auf. Ferner ist an der Innenseite des Lastenaufnahmebehälters 100 eine Lastenaufnahmebehälterdeckelöffnungssensorik 106 vorgesehen, insbesondere mit dem Lastenaufnahmebehälterkörper 101 verbunden. Besonders bevorzugt ist es, dass die Lastenaufnahmebehälterdeckelöffnungssensorik 106 den Öffnungszustand eines, nicht dargestellten, Lastenaufnahmebehälterdeckels erfasst und indirekt oder direkt bei geöffnetem Deckel die Innenraumbeleuchtung 102 aktiviert bzw. bei geschlossenem Deckel deaktiviert.

Ferner weist der Lastenaufnahmebehälter 100 eine Kopplungsvorrichtung 105 zur koppelnden Anbringung des Lastenaufnahmebehälters 100 an einem Lastenrad auf.

Figur 3 zeigt eine Schnittansicht einer weiteren bevorzugten Ausführungsform eines Lastenaufnahmebehälters 100 mit einer weiteren Ausführungsform eines Beleuchtungssystems 10. Das dargestellte Ausführungsbeispiel ist im Wesentlichen am Ausführungsbeispiel aus Figur 2 angelegt.

Insbesondere zur Energieversorgung des Lastenaufnahmebehälters 100, vorzugsweise zur Energieversorgung des Beleuchtungssystems 10, weist der Lastenaufnahmebehälter 100 im Bereich des Bodens 138 ein Dockingsystem 1008 mit Dockingvorrichtung 114 auf. Die Dockingvorrichtung 114 ist in einer nach außen hin offenen Ausnehmung 110c des Lastenaufnahmebehälter 100, bzw. des Lastenaufnahmebehälterkörpers 101 angeordnet. Besonders bevorzugt ist es, dass die Dockingvorrichtung 114 mit einer Dockingvorrichtung 1010, wie beispielsweise in Figur 1 dargestellt, dockt und somit eine Energieversorgung über Batterie 1004 ermöglicht. Bevorzugt erfolgt die Energieübertragung über einen Energiekontakt 115, der insbesondere in Kontakt kommt mit dem Energiekontakt 1010 (Fig. 1). In einer innenliegenden Kavität 122d ist eine Batterie 116 zur Energieversorgung des Lastenaufnahmebehälters 100, insbesondere zur Energieversorgung des Beleuchtungssystems 10 vorgesehen. Wie dargestellt, kann die Batterie 116 zusätzlich zu dem Dockingsystem 1008 vorhanden sein, wobei dann insbesondere die Batterie 116 über das Dockingsystem 1008 mit Energie gespeist wird. Alternativ ist es jedoch auch, nicht dargestellt, möglich, lediglich die Batterie 116 vorzusehen oder lediglich das Dockingsystem 1008 vorzusehen. Mit dem Dockingsystem 1008 und/oder der Batterie 116 ist eine, insbesondere optionale, Steuervorrichtung 126 verbunden. Dargestellt ist die Steuervorrichtung ebenfalls in einer Kavität 122d angeordnet. Die Verbindung erfolgt kabelgebunden über Kabel 124c, welches in einer als Kabelkanal ausgebildeten Kavität 122 liegt. Die Steuervorrichtung 126 ist insbesondere zur Steuerung des Beleuchtungssystem, vorzugsweise der Leuchtvorrichtungen ausgebildet. Besonders bevorzugt ist eine drahtlose und/oder drahtverbundene Ansteuerung der Steuervorrichtung 126, beispielsweise zur Aktivierung oder Deaktivierung der Leuchtvorrichtungen gegeben.

Die Innenraumbeleuchtung 102 ist in einer Kavität 122a, ausgeführt als nach innen offene Ausnehmung, angeordnet. Die Energieversorgung der Innenbeleuchtung 102 erfolgt von dem Dockingssystem 1008 und/oder der Batterie 116 über ein Kabel 124a, welches durch eine zum Innenraum hin offene Kavität 122b geführt wird.

Im Bereich der Front ist eine Abblendleuchtvorrichtung 34 sowieso eine Kurvenleuchtvorrichtung 50 vorgesehen, die über ein Kabel 124b in einer innenliegenden Kavität 122c gesteuert und/oder mit Energie versorgt werden.

Der Abblendscheinwerfer 36 der Abblendleuchtvorrichtung 34 ist in einer Ausnehmung 110a angeordnet, wobei dargestellt der Abblendscheinwerfer nicht über die Kontur des Lastenaufnahmebehälters 100 hervorsteht.

Der Kurvenscheinwerfer 52 der Kurvenleuchtvorrichtung 50 ist ebenfalls in einer Ausnehmung 110b aufgenommen, jedoch steht der Kurvenscheinwerfer 52, dargestellt, über die Kontur des Lastenaufnahmebehälters 100 hervor. Beispielsweise ist es hierdurch möglich einen größeren Lichtradius mittels Kurvenscheinwerfer 52 im Vergleich zu Abblendscheinwerfer 36 zu erzeugen und/oder über eine, nicht dargestellte, Schwenkvorrichtung ein Schwenken des Kurvenscheinwerfers 52 vorzunehmen.

Jegliche Kombination der Elemente, insbesondere der Leuchtvorrichtungen, vorzugsweise der in den Figuren dargestellten und oben beschriebenen, sind in bevorzugten Ausführungsformen umsetzbar.

## Patentansprüche

1. Lastenaufnahmebehälter (100) für Lastenfahrräder (1000), insbesondere für Long John-Lastenfahrräder, mit einem Beleuchtungssystem (10),
wobei das Beleuchtungssystem (10) mindestens eine mit dem Lastenaufnahmebehälter (100) verbundene Leuchtvorrichtung (14, 18, 22, 26, 30, 34, 42, 44, 50) aufweist, und
wobei eine der mindestens einen Leuchtvorrichtung (14, 18, 22, 26, 30, 34, 42, 44, 46, 50) eine Fahrtrichtungsanzeigeleuchtvorrichtung (18) ist
**dadurch gekennzeichnet, dass**
der Lastenaufnahmebehälter (100) mindestens eine, zur Außenseite hin offene, Ausnehmung (110), zur zumindest teilweisen Aufnahme mindestens einer der Leuchtvorrichtungen (14, 18, 22, 26, 30, 34, 46) aufweist,
wobei die Fahrtrichtungsanzeigeleuchtvorrichtung (18) zumindest teilweise in der Ausnehmung (110) aufgenommen ist.

2. Lastenaufnahmebehälter (100) nach Anspruch 1, **dadurch gekennzeichnet, dass** das Beleuchtungssystem (10) ferner mindestens eine der folgenden Leuchtvorrichtungen (14, 22, 26, 30, 34, 42, 44, 46, 50) aufweist:
- eine Positionslaternenleuchtvorrichtung (14); und/oder
- eine Konturleuchtvorrichtung (22), zur Konturbeleuchtung des Lastenfahrrads (1000) und/oder des Lastenaufnahmebehälters (100); und/oder
- eine Positionsleuchtvorrichtung (26); und/oder
- eine Nebelleuchtvorrichtung (30); und/oder
- eine, mindestens einen Abblendscheinwerfer (36) aufweisenden, Abblendleuchtvorrichtung (34); und/oder
- eine, mindestens eine Schlussleuchte (40) aufweisenden, Schlussleuchtvorrichtung (38); und/oder
- mindestens einen Rückstrahler (42); und/oder
- mindestens einen Frontstrahler (44); und/oder
- eine Unterbodenleuchtungsvorrichtung (46).

3. Lastenaufnahmebehälter (100) nach Anspruch 1 oder 2, **gekennzeichnet durch** eine Innenraumbeleuchtung (102) zur Ausleuchtung, zumindest eines Teils, des Innenraums (104) des Lastenaufnahmebehälters (100).

4. Lastenaufnahmebehälter (100) nach Anspruch 3, **gekennzeichnet durch** eine Lastenaufnahmebehälterdeckelöffnungssensorik (106) zur Erfassung des Öffnungszustands eines Lastenaufnahmebehälterdeckels (108) und vorzugsweise direkten oder indirekten Aktivierung der Innenraumbeleuchtung (102) bei Öffnen des Lastenaufnahmebehälterdeckels (108) und/oder Deaktivierung bei Schließen des Lastenaufnahmebehälterdeckels (108).

5. Lastenaufnahmebehälter (100) nach einem der Ansprüche 1-4, **dadurch gekennzeichnet, dass** der Lastenaufnahmebehälter (100) mindestens eine, zur Außenseite hin offene, Ausnehmung (110), zur:
- Aufnahme einer, vorzugsweise eine Dockingvorrichtung (114) zur, insbesondere selektiven, Verbindung mit einer E-Fahrrad-Batterie (1004) oder eine Batterie (116) aufweisenden, Energieversorgungsvorrichtung (112), insbesondere für die Kurvenlichtvorrichtung (12); aufweist.

6. Lastenaufnahmebehälter (100) nach einem der Ansprüche 1-5, **dadurch gekennzeichnet, dass** die mindestens eine Leuchtvorrichtung (14, 18, 22, 26, 30, 34, 42, 44, 46, 50) mit einer Außenfläche des Lastenaufnahmebehälters (100) verbunden ist, oder dass die mindestens eine Leuchtvorrichtung (14, 18, 22, 26, 30, 34, 42, 44, 46, 50) innerhalb der Kontur des Lastenaufnahmebehälters (100) aufgenommen ist, insbesondere in den Lastenaufnahmebehälter (100) eingelassen ist.

7. Lastenaufnahmebehälter (100) nach einem der Ansprüche 1-6, **dadurch gekennzeichnet, dass** das Beleuchtungssystem (10) als eine der mindestens einen Leuchtvorrichtung (14, 22, 26, 30, 34, 42, 44, 46, 50) eine Kurvenleuchtvorrichtung (50) an dem Lastenaufnahmebehälter (100), vorzugsweise an der Front (118) des Lastenaufnahmebehälters (100), aufweist.

8. Lastenaufnahmebehälter (100) nach Anspruch 7, **dadurch gekennzeichnet, dass** die Kurvenleuchtvorrichtung (50):
- beidseitig an der Front (118) oder den Seitenwänden (120) des Lastenaufnahmebehälters (100) angeordnet ist; und/oder
- in der unteren Hälfte, bevorzugt dem unteren Drittel, besonders bevorzugt dem unteren Viertel, des Lastenaufnahmebehälters angeordnet ist; und/oder
- im seitlichen Kantenbereich, vorzugsweise im äußeren Viertel der seitlichen Kantenbereiche, angeordnet ist.

9. Lastenaufnahmebehälter (100) nach einem der Ansprüche 1-8, **dadurch gekennzeichnet, dass** der Lastenaufnahmebehälter (100) mindestens eine, zur Innenseite hin offene oder innenliegende, Kavität (122) zur:
- Aufnahme mindestens eines Kabels (124), insbesondere für die Leuchtvorrichtungen (14, 18, 22, 26, 30, 34), (36); und/oder
- Aufnahme mindestens einer Steuervorrichtung (126) für die Kurvenlichtvorrichtung (50); und/oder
- Aufnahme einer, vorzugsweise eine Batterie (116) aufweisenden, Energieversorgungsvorrichtung (128) für die Kurvenlichtvorrichtung (12); und/oder
- Aufnahme der Innenraumbeleuchtung (102); aufweist.

10. Lastenaufnahmebehälter (100) nach einem der Ansprüche 1-9, **gekennzeichnet durch** eine an der Außenseite (100) des Lastenaufnahmebehälters angeordnete Strahlervorrichtung (132), wobei es bevorzugt ist, dass die Strahlervorrichtung (132) mindestens einen Reflektor (134), vorzugsweise mindestens ein Reflektorband, an einer Seitenwand (120a) des Lastenaufnahmebehälters und/oder an einer anderen Seitenwand (120b)des Lastenaufnahmebehälters (100) und/oder an einer Front (118) des Lastenaufnahmebehälters (100) und/oder an einem Heck (136) des Lastenaufnahmebehälters (100) und/oder an einem Lastenaufnahmebehälterdeckel (108) aufweist.

11. Lastenfahrrad (1000), insbesondere Long John-Lastenfahrrad, mit
einem, vorzugsweise ein Tragelement (1006) aufweisenden, Lastenfahrradrahmen (1002), und
einem Lastenaufnahmebehälter (100) nach einem der Ansprüche 1 bis 10.

12. Lastenfahrrad (1000) nach Anspruch 11, **gekennzeichnet durch** eine mit dem Lastenfahrradrahmen (1002) verbundene, insbesondere im Bereich eines Tragelements (1006) angeordnete, E-Fahrrad-Batterie (1004), wobei das Beleuchtungssystem (10) zur Energieversorgung mit der E-Fahrrad-Batterie (1004) verbunden ist.

13. Lastenfahrrad (1000) nach Anspruch 11 oder 12, **gekennzeichnet durch** ein Dockingsystem (1008) zur, vorzugsweise selektiven, Energieverbindung des Lastenaufnahmebehälters (100) mit der E-Fahrrad-Batterie (1004).

14. Lastenfahrrad (1000) nach Anspruch 13, **dadurch gekennzeichnet, dass** das Dockingsystem (1008) eine mit dem Lastenaufnahmebehälter (100) verbundene, vorzugsweise im Bereich des Bodens (138) des Lastenaufnahmebehälters (100) angeordnete, erste Dockingvorrichtung (114), und eine, mit der E-Fahrrad-Batterie (1004) direkt oder indirekt verbundene, vorzugsweise im Bereich des Tragelements (1006) angeordnete zweite Dockingvorrichtung (1010) aufweist.

## Claims

1. A load-receiving container (100) for load-carrying bicycles (1000), in particular Long John load-carrying bicycles, comprising a lighting system (10),
wherein the lighting system (10) comprises at least one lighting device (14, 18, 22, 26, 30, 34, 42, 44, 50) connected to the load-receiving container (100), and
wherein one of the at least one lighting devices (14, 18, 22, 26, 30, 34, 42, 44, 46, 50) is a direction indicator lighting device (18),
**characterized in that**
the load-receiving container (100) has at least one recess (110), which is open towards the outside, for at least partially receiving at least one of the lighting devices (14, 18, 22, 26, 30, 34, 46),
wherein the direction indicator lighting device (18) is at least partially accommodated in the recess (110).

2. The load-receiving container (100) according to claim 1, **characterized in that** the lighting system (10) further comprises at least one of the following lighting devices (14, 22, 26, 30, 34, 42, 44, 46, 50):
- a position lantern lighting device (14); and/or
- a contour lighting device (22) for illuminating the contour of the load-carrying bicycle (1000) and/or a load-receiving container (100); and/or
- a position lighting device (26); and/or
- a fog lighting device (30); and/or
- a low-beam lighting device (34) comprising at least one low-beam headlight (36); and/or
- a rear lighting device (38) comprising at least one rear light (40); and/or
- at least one rear reflector (42); and/or
- at least one front reflector (44); and/or
- an underside lighting device (46).

3. The load-receiving container (100) according to claim 1 or 2, **characterized by** an interior lighting (102) for illuminating at least a part of the interior (104) of the load-receiving container (100).

4. The load-receiving container (100) according to claim 3, **characterized by** a load-receiving container lid opening sensor system (106) for detecting the opening state of a load-receiving container lid (108) and for the preferably direct or indirect activation of the interior lighting (102) when the load-receiving container lid (108) is opened and/or deactivation when the load-receiving container lid (108) is closed.

5. The load-receiving container (100) according to one of claims 1-4, **characterized in that** the load-receiving container (100) comprises at least one recess (110) open towards the outside for:
- receiving a power supply device (112), in particular for the cornering light device (12), comprising a docking device (114) for a in particular selective connection to an e-bicycle battery (1004) or comprising a battery (116).

6. The load-receiving container (100) according to one of claims 1-5, **characterized in that** the at least one lighting device (14, 18, 22, 26, 30, 34, 42, 44, 46, 50) is connected to an outer surface of the load-receiving container (100), or **in that** the at least one lighting device (14, 18, 22, 26, 30, 34, 42, 44, 46, 50) is accommodated within the contour of the load-receiving container (100), in particular is recessed in the load-receiving container (100).

7. The load-receiving container (100) according to one of claims 1-6, **characterized in that** the lighting system (10) comprises a cornering lighting device (50) as one of the at least one lighting devices (14, 22, 26, 30, 34, 42, 44, 46, 50) on the load-receiving container (100), preferably on the front (118) of the load-receiving container (100).

8. The load-receiving container (100) according to claim 7, **characterized in that** the cornering lighting device (50):
- is arranged on both sides at the front (118) or the side walls (120) of the load-receiving container (100); and/or
- is arranged in the lower half, preferably the lower third, particularly preferred the lower quarter of the load-receiving container; and/or
- is arranged in the lateral edge region, preferably the outer quarter of the lateral edge regions.

9. The load-receiving container (100) according to one of claims 1-8, **characterized in that** the load-receiving container (100) comprises at least one cavity (122) open to the inside or located inside for:
- receiving at least one wire (124) in particular for the light devices (14, 18, 22, 26, 30, 34) (36); and/or
- receiving at least one control device (126) for the cornering light device (50); and/or
- receiving a power supply device (128) for the cornering light device (12), preferably comprising a battery (116); and/or
- receiving the interior lighting (102).

10. The load-receiving container (100) according to one of claims 1-9, **characterized by** a reflector device (132) arranged on the outer side of the load-receiving container (100), wherein it is preferred that the reflector device (132) comprises at least one reflector (134), preferably at least a reflector strip, on one side wall (120a) of the load-receiving container and/or on another side wall (120b) of the load-receiving container (100) and/or on a front (118) of the load-receiving container (100) and/or on a rear (136) of the load-receiving container (100) and/or in a load-receiving container lid (108).

11. A load-carrying bicycle (1000), in particular a Long John load-carrying bicycle, comprising
a load-carrying bicycle frame (1002), preferably including a carrying element (1006), and
a load-receiving container (100) according to any one of claims 1 to 10.

12. The load-carrying bicycle (1000) according to claim 11, **characterized by** an e-bicycle battery (1004) connected to the load-carrying bicycle frame (1002) and arranged in particular in the area of a carrying element (1006), the lighting system (10) being connected to the e-bicycle battery (1004) for power supply.

13. The load-carrying bicycle (1000) according to claim 11 or 12, **characterized by** a docking system (1008) for the preferably selective power connection of the load-receiving container (100) to the e-bicycle battery (1004).

14. The load-carrying bicycle (1000) according to claim 13, **characterized in that** the docking system (1008) comprises a first docking device (114) connected to the load-receiving container (100) and preferably arranged in the area of the bottom (138) of the load-receiving container (100), and a second docking device (1010) directly or indirectly connected to the e-bicycle battery (1004) and preferably arranged in the area of the support element (1006).

## Revendications

1. Réceptacle de charge (100) pour des vélos-cargos (1000), en particulier pour des vélos-cargos de type Long John, comportant un système d'éclairage (10),
dans lequel le système d'éclairage (10) présente au moins un dispositif lumineux (14, 18, 22, 26, 30, 34, 42, 44, 50) connecté au réceptacle de charge (100), et
dans lequel l'un parmi l'au moins un dispositif lumineux (14, 18, 22, 26, 30, 34, 42, 44, 46, 50) est un dispositif lumineux d'indication de direction de déplacement (18)
**caractérisé en ce que**
le réceptacle de charge (100) présente au moins un évidement (110) ouvert vers le côté extérieur, pour recevoir au moins partiellement au moins l'un des dispositifs lumineux (14, 18, 22, 26, 30, 34, 46),
dans lequel le dispositif lumineux d'indication de direction de déplacement (18) est au moins partiellement reçu dans l'évidement (110).

2. Réceptacle de charge (100) selon la revendication 1, **caractérisé en ce que** le système d'éclairage (10) présente en outre au moins l'un des dispositifs lumineux (14, 22, 26, 30, 34, 42, 44, 46, 50) suivants :
- un dispositif lumineux de feu de position (14) ; et/ou
- un dispositif lumineux de contour (22), pour l'éclairage de contour du vélo-cargo (1000) et/ou du réceptacle de charge (100) ; et/ou
- un dispositif lumineux de position (26) ; et/ou
- un dispositif antibrouillard (30) ; et/ou
- un dispositif lumineux de croisement (34) présentant au moins un feu de croisement (36) ; et/ou
- un dispositif lumineux arrière (38) présentant au moins un feu arrière (40) ; et/ou
- au moins un catadioptre (42) ; et/ou
- au moins un projecteur frontal (44) ; et/ou
- un dispositif d'éclairage de dessous (46).

3. Réceptacle de charge (100) selon la revendication 1 ou 2, **caractérisé par** un éclairage d'espace intérieur (102) pour l'éclairage, au moins d'une partie, de l'espace intérieur (104) du réceptacle de charge (100).

4. Réceptacle de charge (100) selon la revendication 3, **caractérisé par** un système de capteurs d'ouverture de couvercle de réceptacle de charge (106) pour la détection de l'état d'ouverture d'un couvercle de réceptacle de charge (108) et, de préférence, l'activation directe ou indirecte de l'éclairage d'espace intérieur (102) lors de l'ouverture du couvercle de réceptacle de charge (108) et/ou la désactivation lors de la fermeture du couvercle de réceptacle de charge (108).

5. Réceptacle de charge (100) selon l'une des revendications 1 à 4, **caractérisé en ce que** le réceptacle de charge (100) présente au moins un évidement (110) ouvert vers le côté extérieur pour :
- la réception d'un dispositif d'alimentation en énergie (112), en particulier pour le dispositif lumineux de virage (12), présentant de préférence un dispositif d'accueil (114) pour la connexion, en particulier sélective, avec une batterie de vélo électrique (1004) ou une batterie (116).

6. Réceptacle de charge (100) selon l'une des revendications 1 à 5, **caractérisé en ce que** l'au moins un dispositif lumineux (14, 18, 22, 26, 30, 34, 42, 44, 46, 50) est connecté à une surface extérieure du réceptacle de charge (100), ou **en ce que** l'au moins un dispositif lumineux (14, 18, 22, 26, 30, 34, 42, 44, 46, 50) est reçu à l'intérieur du contour du réceptacle de charge (100), en particulier est encastré dans le réceptacle de charge (100).

7. Réceptacle de charge (100) selon l'une des revendications 1 à 6, **caractérisé en ce que** le système d'éclairage (10) présente, en tant que l'un parmi l'au moins un dispositif lumineux (14, 22, 26, 30, 34, 42, 44, 46, 50), un dispositif lumineux de virage (50) sur le réceptacle de charge (100), de préférence sur la face avant (118) du réceptacle de charge (100).

8. Réceptacle de charge (100) selon la revendication 7, **caractérisé en ce que** le dispositif lumineux de virage (50) :
- est disposé des deux côtés sur la face avant (118) ou les parois latérales (120) du réceptacle de charge (100) ; et/ou
- est disposé dans la moitié inférieure, de préférence dans le tiers inférieur, de manière particulièrement préférée dans le quart inférieur, du réceptacle de charge ; et/ou
- est disposé dans la zone de bord latérale, de préférence dans le quart extérieur des zones de bord latérales.

9. Réceptacle de charge (100) selon l'une des revendications 1 à 8, **caractérisé en ce que** le réceptacle de charge (100) présente au moins une cavité (122) ouverte vers le côté intérieur ou située à l'intérieur pour :
- la réception d'au moins un câble (124), en particulier pour les dispositifs lumineux (14, 18, 22, 26, 30, 34), (36) ; et/ou
- la réception d'au moins un dispositif de commande (126) pour le dispositif lumineux de virage (50) ; et/ou
- la réception d'un dispositif d'alimentation en énergie (128), présentant de préférence une batterie (116), pour le dispositif lumineux de virage (12) ; et/ou
- la réception de l'éclairage d'espace intérieur (102).

10. Réceptacle de charge (100) selon l'une des revendications 1 à 9, **caractérisé par** un dispositif de rayonnement (132) disposé sur le côté extérieur (100) du réceptacle de charge, dans lequel il est préférable que le dispositif de rayonnement (132) présente au moins un réflecteur (134), de préférence au moins une bande réflectrice, sur une paroi latérale (120a) du réceptacle de charge et/ou sur une autre paroi latérale (120b) du réceptacle de charge (100) et/ou sur une face avant (118) du réceptacle de charge (100) et/ou sur une face arrière (136) du réceptacle de charge (100) et/ou sur un couvercle de réceptacle de charge (108).

11. Vélo-cargo (1000), en particulier vélo-cargo de type Long John, comportant
un cadre de vélo-cargo (1002), présentant de préférence un élément de support (1006), et
un réceptacle de charge (100) selon l'une des revendications 1 à 10.

12. Vélo-cargo (1000) selon la revendication 11, **caractérisé par** une batterie de vélo électrique (1004) reliée au cadre de vélo-cargo (1002), en particulier disposée dans la zone d'un élément de support (1006), dans lequel le système d'éclairage (10) est connecté à la batterie de vélo électrique (1004) pour l'alimentation en énergie.

13. Vélo-cargo (1000) selon la revendication 11 ou 12, **caractérisé par** un système d'accueil (1008) pour la connexion énergétique, de préférence sélective, du réceptacle de charge (100) à la batterie de vélo électrique (1004).

14. Vélo-cargo (1000) selon la revendication 13, **caractérisé en ce que** le système d'accueil (1008) présente un premier dispositif d'accueil (114) relié au réceptacle de charge (100), de préférence disposé dans la zone du fond (138) du réceptacle de charge (100), et un second dispositif d'accueil (1010) connecté directement ou indirectement à la batterie de vélo électrique (1004), de préférence disposé dans la zone de l'élément de support (1006).
